# EUROPEAN PATENT APPLICATION

(11) **EP 4 773 153 A1**
(43) Date of publication of application: **08.07.2026**
(21) Application number: 25225693.8
(22) Date of filing: 19.12.2025
(51) Int. Cl.: H01B 7/282, H02G 15/18

(54) **POWER CABLE**

(30) Priority: 23.12.2024 NO 20241265
(71) Applicant: Nexans, 92400 Courbevoie (FR)
(72) Inventor: Johansen, Ben Kristian, N-1779 Halden (NO); Hall, Jon Arne, 1709 Sarpsborg (NO); Doedens, Espen, 1788 Halden (NO)
(74) Representative: Acapo Onsagers AS

(57) **Abstract**

A power cable (10) comprises at least one cable core (11) comprising an electrical conductor (20) having two or more conductor elements (12) and an insulating system (19, 15, 16) radially surrounding the electrical conductor (20), where the insulating system comprises an inner semiconductive layer, insulation layer and outer semiconductive layer. The electrical conductor (20) comprises a plurality of transversally arranged watertight barriers (21) arranged intermittently along the longitudinal direction of the power cable (10) wherein the plurality of watertight barriers (21) have a diameter (D) and a length (L), where the diameter of the watertight barriers essentially corresponds to the diameter (d) of the conductor, and wherein the outer surface of the plurality of watertight barriers (21) is watertight linked to an extension layer extending a distance along the length of the electrical conductor. A method for manufacturing a power cable with water barrier, comprising the steps of: a) providing an electrical conductor (20) having two or more conductor elements (12), b) providing a plurality of watertight barriers arranged intermittently along the longitudinal direction of the electrical conductor, wherein the plurality of watertight barriers have a diameter and a length, where the diameter of the watertight barriers essentially corresponds to the diameter of the electrical conductor, c) link the outer surface of the plurality of watertight barriers (21) watertight to an extension layer so that the extension layer extends a distance along the length of the electrical conductor, and d) providing an insulating system (13, 15, 16) radially surrounding the electrical conductor (20), where the insulating system comprises an inner semiconductive layer, insulation layer and outer semiconductive layer.

## Description

### Field of the invention

The present invention relates to the field of high voltage power cables. More specifically the invention relates to electric power cables with improved water resistance and a method for manufacturing such power cables.

### Background

Power cables, especially for high voltage power transfer, require a significant conductor cross section to transfer electrical power. This is commonly achieved by combining a number of metal strands/elements to form the conductor. The number, size and cross section of the strands and the conductor may vary however this is generally referred to as a non-solid conductor or multi strand conductor.

To effectively convey electrical power from one location to another, an electrical cable must minimize or prevent any degradation in its conductivity caused by water entrance into the cable. High moisture levels inside the electrical cable can have a detrimental effect on the conductive characteristics of the conductor and on the insulation material. Depending on the construction of the particular electrical cable, the introduction of moisture can result in a short circuit, an increase in the electrical cable's capacitance, or in the complete failure of the electrical cable.

Water may enter the cable in various ways; through the end portion of the conductor, or through a water passage if the insulation, outer jacket or other protective layers that have been compromised or by outer damages that causes water ingress into the conductor.

To solve the problem of damage to the conductor due to water entering the cable or damage to the water barrier, various arrangements are known within the art. In accordance with a known solution a filler compound is inserted in between the strands of the conductor. This arrangement may be supplemented with tape wraps capable of swelling in contact with water. The use of filler compounds and swellable tape wraps may be used in combination or each may be used alone. The existing filler compounds and tape solutions have proven to be insufficient to prevent or limit water exposure to the conductor especially at high water pressure, or even if they are sufficient, there are drawbacks to the use of such filler compounds.

US2014305678 describes a cable with transverse welds to suppress entrance of water through spaces between strands of the conductor. The transverse welds are described to be welded when compressing the conductor strands, so that the cross section of the welded strands is smaller than the cross section of the uncompressed strands. After welding, the covering is replaced over the part of the core where the covering was removed for making the transverse welds.

### SUMMARY OF THE INVENTION

The object of the invention is thus to propose an electric power cable with improved water resistance. The object is achieved by means of the features of the independent claim 1. Advantageous embodiments and further improvements may be gathered from the dependent claims and the following description.

In a first aspect, the invention relates to a power cable comprising at least one cable core comprising an electrical conductor having two or more conductor elements and an insulating system radially surrounding the electrical conductor, where the insulating system comprises an inner semiconductive layer, insulation layer and outer semiconductive layer. The electrical conductor comprises a plurality of transversally arranged watertight barriers arranged intermittently along the longitudinal direction of the power cable wherein the plurality of watertight barriers have a diameter and a length, where the diameter of the watertight barriers essentially corresponds to the diameter of the conductor. The outer surface of the plurality of watertight barriers is watertight linked to an extension layer extending a distance along the length of the electrical conductor.

In a second aspect, the invention also provides a method for manufacturing a power cable with water barrier, which method comprises the steps of:
a) providing an electrical conductor having two or more conductor elements,
b) providing a plurality of watertight barriers arranged intermittently along the longitudinal direction of the electrical conductor, wherein the plurality of watertight barriers have a diameter and a length, where the diameter of the watertight barriers essentially corresponds to the diameter of the electrical conductor,
c) link the outer surface of the plurality of watertight barriers watertight to an extension layer so that the extension layer extends a distance along the length of the electrical conductor, and
d) providing an insulating system radially surrounding the electrical conductor, where the insulating system comprises an inner semiconductive layer, insulation layer and outer semiconductive layer.

As an example of the diameter of the watertight barriers essentially corresponding to the diameter of the conductor, it is within a close diameter range, such as within +/- 5mm.

The transversally arranged watertight barriers may be of different types, depending on the intended use of the cable, the presumed environmental challenges the cable is supposed to meet and mechanical challenges such as mechanical stress during installation. There may be cases where there are different types of transversally arranged watertight barriers along the length of the cable, for example one type in one section of the cable and a different type in other sections of the cable, or using one type of transversally arranged watertight barriers at cable joints and other types at other locations, etc.

The distance between each of the transversally arranged watertight barriers may vary depending on the length of the cable, the environmental conditions where the cable is to be laid, the repair strategy of the cable, etc. Examples include 10-100m, 100m-1000m, 1km-10km between the transversally arranged watertight barriers.

In one configuration, the plurality of watertight barriers are connectors connecting two adjacent lengths of electrical conductors.

Alternatively, or additionally, the plurality of watertight barriers may be transverse metallic welds which each extend through the entire diameter of the electrical conductor.

Step b) of the above method may similarly include connecting connectors to two adjacent lengths of electrical conductors and/or include welding a section of the electrical conductors.

Such welding may be done by high current butt welding or other suitable welding techniques.

A transverse metallic weld is a cross-sectional region of a metal body where the temperature has been elevated over the metal body's melding point so that the metal melts to form a weld.

The solution is relevant for stranded conductors of several kinds, such as milliken, round wires, or keystone, that need a means to stop water penetration at high pressure in between wires.

Stranded electrical conductors are conductors comprising a plurality of conductor elements which are stranded to combine the conductor elements into at least one conductor layer to form a conductor.

The stranding process involves twisting together the conductor elements to form one or a plurality of conductor layers in a conductor. The conductor elements are fed from spools or bobbins into a stranding apparatus. The stranding apparatus then twists the conductor elements together, e.g. in a helical pattern around a central axis. In this process there will be formed voids between the conductor elements, and if moisture penetrates into the cable core and reaches the conductor, water can cause the cable to perform poor or fail. As the water can permeate longitudinally along the voids, when unhindered, it can result in a very long cable length that has to be replaced when the damage has occured.

For power cables with stranded electrical conductors, the transverse metallic welds can be achieved by means of a welding machine or similar. The conductor is molten with high current and longitudinally forced together to form a metallic butt weld, forming a solid barrier/weld that stops longitudinal water flow/seepage past the barrier/weld.

The conductor can be cut before forming the watertight barrier, or the watertight barrier can be made straight on the bare conductor without cutting it.

In one configuration, the plurality of watertight barriers comprises two transverse metallic welds formed with a predetermined distance between them along the longitudinal direction of the electrical conductor, the extension layer extends to cover the length of the metallic welds and the distance between the two transverse metallic welds.

The extension layer has as its purpose to extend the watertight barrier to prevent seepage around the watertight barrier.

In one aspect, the inner semiconductive layer constitutes the extension layer.

The outer surface of the watertight barrier may be configured to provide adhesion to the inner semiconductive layer, whereby the inner semiconductive layer constitutes the extension layer.

The extension layer may alternatively comprise watertightening tape such as dedicated swellable tapes, or other watertight tape arranged on the outer surface of the watertight barrier and extending a distance on each side of the watertight barrier in the longitudinal direction of the power cable.

The distance the extension layer extends, for all kinds of extension layer, may be the full length of the cable. This is evident when the extension layer is the inner semiconductor layer, but also for all kinds of tape and other possibilities.

The outer surface of the watertight barriers may comprise a roughness and/or a structure which provides increased adhesion to the electrically insulating layer. The structure may be one or several of one-directional shallow threads, two-directional shallow threads, grooves, microgrooves, etc.

Such structures and/or roughness may be produced by any suitable treatment such as for example machining (for larger textures, threads), knurling, or sand blasting and possibly abrasion (for high roughness).

By the term "adhere to" it should be understood two surfaces that fit precisely together so that there is very little space or points of air or other foreign material between the two surfaces. For example, adhesion occurs when the inner semiconductor material is extruded at molten temperature and high pressure over the weld, such that the plastic bonds to the surface.

As discussed above, the invention prevents water from permeating unhindered longitudinally along the voids in the conductor. It should however be noted that the transversally arranged watertight barriers of the invention can be combined with other water blocking technologies such as filler compounds inserted in between the strands of the conductor, water-blocking tapes, swellable tapes, swellable powders, or impregnated yarns on the outer surfaces of conductors or within the conductor, etc.

### Short description of the drawings

In the following description this invention will be further explained by way of exemplary embodiments shown in the drawings:
Fig. 1 shows an example of a cross section of a power cable.
Fig. 2 illustrates schematically a conductor with two transversally arranged watertight barriers.
Figure 3a and 3b illustrate two examples of a conductor with transversally arranged watertight barrier.
Fig. 4a-4c illustrates different types of transversally arranged watertight barriers.
Fig.5a-5c illustrates different types of possible welds

The skilled person will appreciate the power cable may be provided with additional outer layer for protection like water barrier, armouring layers further outer sheets.

### Detailed description of the invention

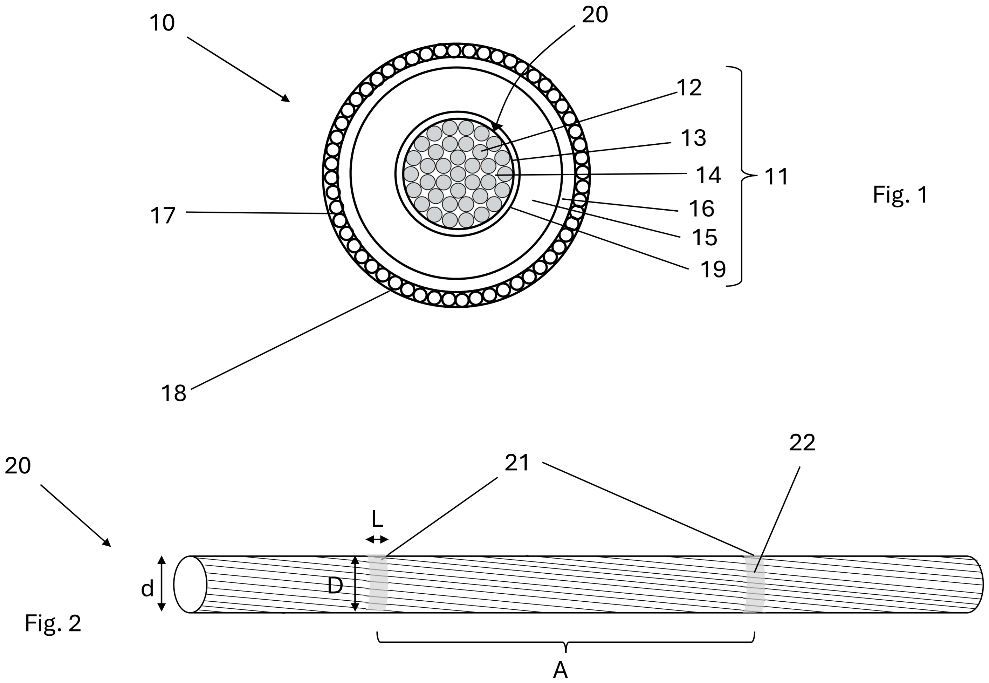

Fig. 1 shows an example of a cross section of a power cable. The power cable 10 comprises at least one cable core 11 comprising an electrical conductor 20 having two or more conductor elements 12 and an insulating system 19, 15, 16 radially surrounding the electrical conductor 20, where the insulating system comprises an inner semiconductive layer 19, electrically insulating layer 15 and outer semiconductive layer 16.

The electrical conductor 20 comprises a plurality of conductor elements 12 which are stranded to combine the conductor elements into at least one conductor layer to form the conductor 20.

The electrical conductor 20 comprises a plurality of transversally arranged watertight barriers 21 arranged intermittently along the longitudinal direction of the power cable 10.

The illustrated cable further comprises a tape layer 13, which may optionally be included between the conductor 20 and the inner semiconducting layer 19. The illustrated cable also comprises an armoring 17 and outer sheath 18.

Figure 2 illustrates schematically a conductor 20 with two transversally arranged watertight barriers 21 arranged with a distance A between them. The plurality of watertight barriers 21 have a diameter D and a length L, where the diameter D of the watertight barriers essentially corresponds to the diameter d of the conductor.

Further, the outer surface 23 of the plurality of transversally arranged watertight barriers 21 is watertight linked to an extension layer extending a distance along the length of the electrical conductor.

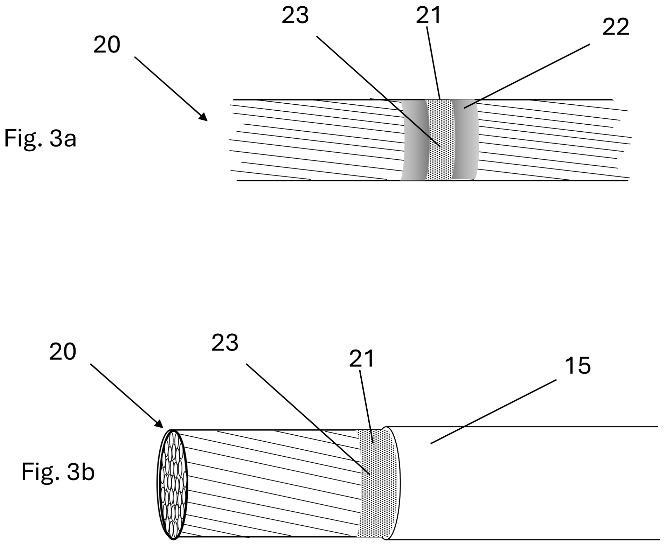

Figure 3a and 3b illustrate two examples of a conductor 20 with a transversally arranged watertight barrier 21 watertight linked to two different types of extension layer. In figure 3a, the outer surface 23 of watertight barrier 21 is watertight linked to an extension layer 22 extending a distance in both directions along the length of the electrical conductor on both sides of the transversally arranged watertight barrier 21. The extension layer may be a swellable tape or any other suitable watertight tape or other watertight material, or it may be the inner semiconductor layer 15 that has good adhesion to the outer surface of the transversally arranged watertight barrier 21 to provide a watertight link between them. Figure 3a illustrates the latter option.

The outer surface of the watertight barriers may be treated or otherwise configured to provide a roughness and/or a structure on the surface which provides increased adhesion between the outer surface of the watertight barriers and the extension layers. This will further strengthen the watertight link between them. The structure may for example be one or several of one-directional shallow threads, two-directional shallow threads, grooves, microgrooves, etc.

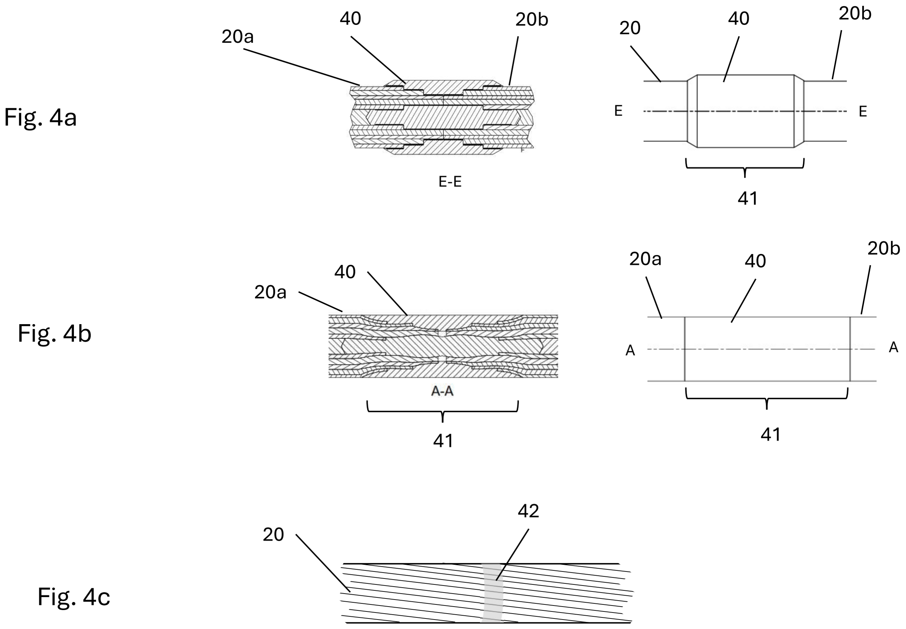

Fig. 4a-4c illustrates different types of transversally arranged watertight barriers.

Figure 4a and 4b illustrates an example where the plurality of watertight barriers are connectors connecting two adjacent lengths of electrical conductors. The connector is in this example in form of a compression ferrule 40, arranged over two abutting conductors 20a, 20b. This could be done during a common joining process to achieve the desired length of conductor, or the conductor might be divided before installing the transversally arranged watertight barrier. Figure 4a shows the first step of the process of installing the transversally arranged watertight barrier where the compression ferrule 40 has been arranged over the joining section 41 between the two abutting conductors 20a, 20b. The compression ferrule 40 is thereafter exposed to pressure that compresses the ferrule and thereby the section of the conductor immediately under the compression ferrule 40. The resulting situation is illustrated in figure 4b. The conductor has been compressed to produce a solid plug which constitute the transversally arranged watertight barrier.

**In** figure 4c the watertight barriers in the example is a transverse metallic weld 42 which each extend through the entire diameter of the electrical conductor (12). The weld 42 is produced by means of a welding machine or similar. The conductor 20 is molten with high current and longitudinally forced together to form a metallic butt weld, forming a solid barrier/weld 42 that stops longitudinal water seepage past the barrier/weld in the longitudinal direction. The welding may be done during a common joining process to achieve the desired length of conductor, or the conductor might be divided before welding, or the welding may be performed on a continuous conductor.

The transverse metallic welds each extend through the entire diameter of the electrical conductor, thereby producing a solid transversally arranged watertight barrier.

Yet another example which is not illustrated, may be an embodiment where the plurality of watertight barriers comprises two transverse metallic welds formed with a predetermined distance between them along the longitudinal direction of the electrical conductor, and where the cylindrical extension layer extends to cover the length of the metallic welds and the distance between the two transverse metallic welds.

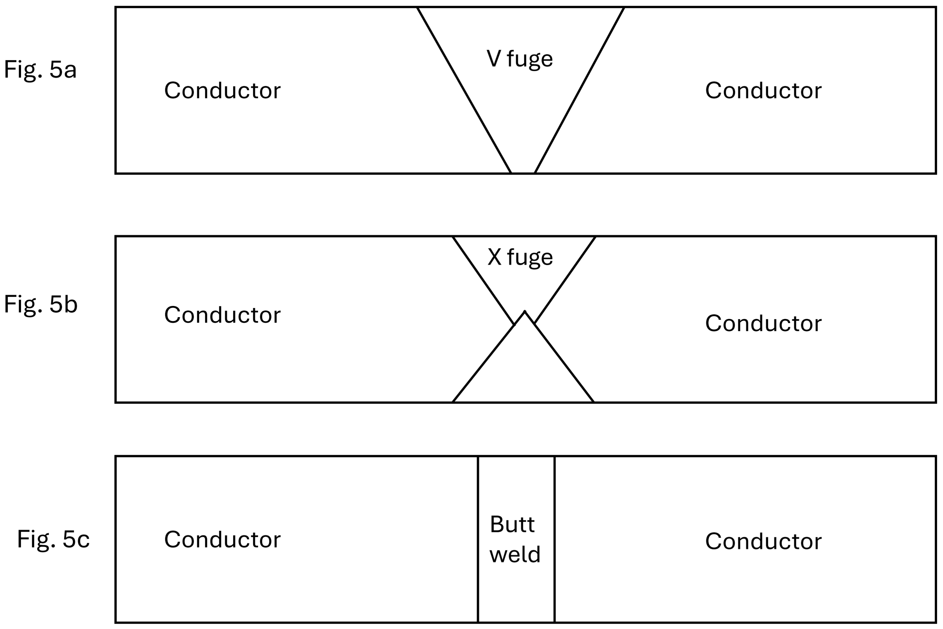

Fig.5a-5c illustrates different types of possible welds that can be used to produce the transversally arranged watertight barrier 21.

### Reference numbers:

- 10: power cable
- 11: cable core
- 12: conductor element
- 13: tape
- 14: voids
- 15: electrically insulating layer
- 16: outer semiconductive layer
- 17: armoring
- 18: outer sheath
- 19: inner semiconductor layer
- 20: conductor
- 21: watertight barrier
- 22: extension layer
- 23: outer surface of watertight barrier
- 40: compression ferrule
- 41: joining section
- 42: metallic weld

## Claims

1. A power cable (10) comprising:
- at least one cable core (11) comprising an electrical conductor (20) having two or more conductor elements (12) and an insulating system (19, 15, 16) radially surrounding the electrical conductor (20), where the insulating system comprises an inner semiconductive layer, insulation layer and outer semiconductive layer, wherein the electrical conductor (20) comprises
- a plurality of transversally arranged watertight barriers (21) arranged intermittently along the longitudinal direction of the power cable (10)
wherein the plurality of watertight barriers (21) have a diameter (D) and a length (L), where the diameter of the watertight barriers essentially corresponds to the diameter (d) of the conductor, and
wherein the outer surface of the plurality of watertight barriers (21) is watertight linked to an extension layer extending a distance along the length of the electrical conductor.

2. The power cable according to claim 1, wherein the plurality of watertight barriers (21) are connectors (40) connecting two adjacent lengths of electrical conductors.

3. The power cable (10) according to claim 1, wherein the plurality of watertight barriers are transverse metallic welds which each extend through the entire diameter of the electrical conductor (20).

4. The power cable according to claim 1, wherein the inner semiconductive layer constitutes the extension layer.

5. The power cable (10) according to any of the previous claims, where the outer surface (23) of the watertight barriers comprises a roughness and/or a structure which provides increased adhesion to the inner semiconductive layer.

6. The power cable according to claim 5, wherein the structure may be one or several of one-directional shallow threads, two-directional shallow threads, grooves, microgrooves.

7. The power cable (10) according to any of the previous claims where the extension layer comprises a watertightening tape arranged on the outer surface of the watertight barrier and extending a distance on each side of the watertight barrier in the longitudinal direction of the power cable.

8. Method for manufacturing a power cable with water barrier, comprising the steps of:
a) providing an electrical conductor (20) having two or more conductor elements (12),
b) providing a plurality of watertight barriers arranged intermittently along the longitudinal direction of the electrical conductor, wherein the plurality of watertight barriers have a diameter and a length, where the diameter of the watertight barriers essentially corresponds to the diameter of the electrical conductor,
c) link the outer surface of the plurality of watertight barriers (21) watertight to an extension layer so that the extension layer extends a distance along the length of the electrical conductor,
d) providing an insulating system (13, 15, 16) radially surrounding the electrical conductor (20), where the insulating system comprises an inner semiconductive layer, insulation layer and outer semiconductive layer.

9. The method according to claim 8, wherein step b) includes connecting connectors to two adjacent lengths of electrical conductors.

10. The method according to claim 9, wherein step b) includes welding a section of the electrical conductors.

11. The method according to claim 8, wherein the inner semiconductive layer is the extension layer.

12. The method according to any of the claims 8-11, further comprising a step e) treating the outer surface of the watertight barrier to provide adhesion to the inner semiconductive layer, whereby the inner semiconductive layer constitutes the extension layer.

13. The method according to any of the claims 8-11, further comprising a step e) treating the outer surface of the watertight barrier to provide roughness and/or a structure which provides increased adhesion to subsequent layer of the power cable.

14. The method according to claim 13, wherein the structure may be one or several of one-directional shallow threads, two-directional shallow threads, grooves, microgrooves.

15. The method according to any of the claims8-14 further comprising a step of arranging a watertight tape on the outer surface of the watertight barrier, where the watertight tape extends a distance on each side of the watertight barrier in the longitudinal direction of the power cable.
